# DEMANDE DE BREVET EUROPEEN

(11) **EP 3 040 220 A1**
(43) Date de publication de la demande: **06.07.2016**
(21) Numéro de dépôt: 15203212.4
(22) Date de dépôt: 30.12.2015
(51) Int. Cl.: B60G 21/073, B60G 21/10, B62K 5/10

(54) **VÉHICULE PENDULAIRE À MOYENS DE VERROUILLAGE DE L'INCLINAISON**

(30) Priorité: 30.12.2014 FR 1463465; 05.03.2015 FR 1551887
(71) Demandeur: SODIKART, 44200 Couëron (FR)
(72) Inventeur: MERIAN, Alain, 44450 LA CHAPELLE BASSE-MER (FR)
(74) Mandataire: Vidon Brevets & Stratégie

(57) **Abrégé**

L'invention concerne un véhicule pendulaire, comprenant au moins un train pendulaire portant deux bras de suspension associés chacun à un vérin hydraulique (12_{G}, 12_{D}), lesdits vérins hydrauliques (12_{G}, 12_{D}) étant reliés entre eux par un circuit hydraulique définissant deux voies monodirectionnelles, une première voie permettant la circulation d'un fluide d'un premier des vérins (12_{G}, 12_{D}) vers le second des vérins (12_{G}, 12_{D}), et une seconde voie permettant la circulation d'un fluide du second des vérins (12_{G}, 12_{D}) vers le premier des vérins (12_{G}, 12_{D}), et ledit véhicule comprenant des moyens de fermeture sélective (15_{G}, 15_{D}) de l'une ou de l'autre desdites voies, de façon que ledit véhicule soit inclinable à l'arrêt.

## Description

### 1. Le domaine de l'invention

Le domaine de l'invention est celui des véhicules pendulaires. Un véhicule pendulaire est un véhicule dont certains éléments sont inclinables, généralement au moins le poste de pilotage (et donc le pilote) de façon à déplacer le centre de gravité du véhicule par rapport aux points d'appui au sol, notamment dans les courbes et les virages.

### 2. Art antérieur

De tels véhicules, généralement à trois ou à quatre roues, permettent de réduire considérablement la largeur des appuis au sol (voie) sans qu'ils basculent et s'avèrent particulièrement efficaces en courbe, l'inclinaison permettant un comportement similaire à celui des deux roues, telles que les motos.

En revanche, cette technique introduit un manque de stabilité, et donc un risque de basculement et/ou de chute du véhicule, à l'arrêt ou à très basse vitesse.

En effet, en mouvement, la force centrifuge, due à la vitesse, compense l'effet de l'inclinaison (qui peut être d'autant plus importante que la vitesse est élevée), ce qui n'est pas le cas à l'arrêt.

Pour pallier cet inconvénient, différentes solutions ont été proposées, consistant à bloquer la partie inclinable dans une position stable (verticale) à l'aide de moyens mécaniques activés par le pilote et/ou de façon automatique, dès qu'une vitesse inférieure à un seuil prédéterminé est atteinte. Ces moyens mécaniques sont relativement complexes, et notamment sujets aux changements soudains ou non anticipés de paramètres d'équilibre (topographie variable : trous, trottoirs, virages serrés,... freinage brutal dès le démarrage, etc), et parfois fragiles.

Par ailleurs, dans certains cas, il serait souhaitable que le véhicule puisse être légèrement incliné, même à l'arrêt, par exemple pour y pénétrer ou en sortir de façon aisée, tout en évitant, bien sûr, que celui-ci chute ou bascule, ou pour contrer l'action d'un vent fort et éviter sa chute lors du stationnement du véhicule.

### 3. Objectifs de l'invention

L'invention a notamment pour objectif de répondre à ce besoin, de façon simple et efficace.

Ainsi, un objectif de l'invention est de fournir un système de contrôle de l'inclinaison d'un véhicule pendulaire, autorisant une inclinaison maîtrisée, et sans danger, y compris à l'arrêt et à faible vitesse.

Un autre objectif de l'invention est, bien sûr, de fournir un tel véhicule, contrôlé de façon qu'il ne bascule pas de façon trop importante, ni ne chute sur le côté.

Encore un objectif de l'invention est, selon au moins un mode de réalisation, de fournir un tel véhicule, dont les moyens de contrôle du ou des éléments pendulaires soient simples, sûrs et fiables dans le temps.

Selon au moins un mode de réalisation de l'invention, un objectif est de fournir un véhicule à quatre roues, pouvant transporter au moins deux personnes.

### 4. Exposé de l'invention

Ces objectifs, ainsi que d'autres qui apparaîtront par la suite, sont atteints à l'aide d'un véhicule pendulaire, comprenant au moins un train pendulaire portant deux bras de suspension associés chacun à un vérin hydraulique, lesdits vérins hydrauliques étant reliés entre eux par un circuit hydraulique définissant deux voies monodirectionnelles, une première voie permettant la circulation d'un fluide d'un premier des vérins vers le second des vérins, et une seconde voie permettant la circulation d'un fluide du second des vérins vers le premier des vérins, et ledit véhicule comprenant des moyens de fermeture sélective de l'une ou de l'autre desdites voies.

Selon l'invention, le véhicule est inclinable à l'arrêt. Pour ceci, il comprend des moyens de commande permettant de fermer lesdits moyens de fermeture de l'inclinaison et de la vitesse dudit véhicule, de façon que :
- à l'arrêt, ledit véhicule peut être incliné par rapport à un axe vertical jusqu'à un seuil d'inclinaison à l'arrêt prédéterminé ;
- au-delà d'un seuil de vitesse minimal, ledit véhicule peut être incliné par rapport à un axe vertical au-delà dudit seuil d'inclinaison prédéterminé.

La présence des deux voies monodirectionnelles permet de fermer sélectivement l'une des voies, notamment lorsqu'une inclinaison trop importante est prise, en particulier à l'arrêt ou à très basse vitesse. Ainsi, on empêche le vérin associé au côté vers lequel le véhicule s'incline de se vider, et donc l'inclinaison de se poursuivre. L'autre voie restant ouverte, le fluide peut circuler dans celle-ci, et il est donc possible de redresser le véhicule, par exemple en le poussant de la main.

Un verrouillage anti-basculement est mis en oeuvre à l'arrêt ou à basse vitesse, tout en permettant d'une part une inclinaison d'une amplitude prédéfinie, à l'arrêt, et une inclinaison d'amplitude plus importante, lorsque le véhicule se déplace.

L'invention va ainsi à l'encontre des enseignements de l'art antérieur et des a priori de l'homme du métier, qui considèrent que, à l'arrêt, les moyens permettant l'inclinaison doivent être bloqués, ou que des moyens supplémentaires doivent s'opposer à toute inclinaison, pour maintenir le véhicule en position verticale. Selon l'approche nouvelle de l'invention, il est possible, à l'arrêt, d'incliner sans risque le véhicule, sur une plage d'inclinaison adaptée, facilitant par exemple l'installation et la sortie d'un pilote ou d'un passager, le chargement ou le déchargement, et/ou le déplacement du véhicule à très faible vitesse. Bien sûr, l'invention permet également de redresser le véhicule à l'arrêt (et le cas échéant de l'incliner de l'autre côté).

Lesdits moyens de fermeture peuvent notamment être contrôlés par un élément de commande réagissant à la gravité et/ou à l'accélération latérale dudit véhicule.

Selon un mode de réalisation particulier, ledit élément de commande comprend un pendule.

Selon d'autres modes de réalisation, ledit élément de commande peut comprendre une masse libre en déplacement latéral dans un support, par exemple une bille ou un cylindre mobile.

Selon une autre approche, les éléments de commande peuvent comprendre un ou plusieurs accéléromètres.

Lesdits moyens de fermeture peuvent notamment être actionnés à partir d'un signal de commande électrique, pilotés par exemple par ledit pendule, ladite masse ou ledit accéléromètre, qui vient fermer un contact associé à l'une ou à l'autre desdites voies monodirectionnelles du circuit hydraulique.

Selon un mode de réalisation particulier, chacun desdits vérins est monté en série avec un amortisseur.

Un tel véhicule pendulaire peut par exemple comprendre deux trains pendulaires, un train avant directeur et un train arrière moteur, lesdits moyens de fermeture sélective étant associés au train arrière.

Il peut notamment comprendre deux places disposées en tandem, par exemple mettre en oeuvre quatre bras tirés.

On peut noter que, outre le contrôle de l'inclinaison, l'invention permet, selon un mode de réalisation particulier, de contrôler également un déplacement de l'avant vers l'arrière, et/ou de l'arrière vers l'avant, par exemple pour assurer une fonction anti-cabrage et/ou anti-plongée. Dans ces cas, les moyens de fermeture agissent en outre sur une autre liaison hydraulique, reliant les circuits hydrauliques des trains avant et arrière, avec deux voies monodirectionnelles.

Ceci peut notamment permettre d'éviter que le véhicule, ou sa structure inclinable, bascule et/ou « s'écrase » sur l'avant ou sur l'arrière alors qu'il est en stationnement, lors d'un chargement ou d'un déchargement.

Selon un mode de réalisation particulier, le véhicule comprend des moyens de recalibrage d'une référence verticale.

Ceci peut permettre de prendre par exemple en compte un cas où le véhicule serait exceptionnellement chargé de façon décentrée, en cas de roulage par vent latéral important, imposant un peu d'inclinaison pour conserver l'équilibre.

L'invention concerne également un procédé de contrôle de l'inclinaison d'un véhicule pendulaire tel que décrit ci-dessus. Un tel procédé comprend notamment les étapes suivantes :
- détermination de la vitesse dudit véhicule ;
- détermination de l'inclinaison dudit véhicule ;
- si le véhicule est à l'arrêt :
   ∘ ouverture des deux voies tant que l'inclinaison est inférieure à un seuil prédéterminé d'inclinaison à l'arrêt, de façon à permettre une inclinaison contrôlée à l'arrêt ;
   o fermeture de l'une desdites voies lorsque ledit seuil prédéterminé d'inclinaison à l'arrêt est atteint, et ouverture de l'autre desdites voies, de façon à permettre le redressement dudit véhicule ;
- si le véhicule est en déplacement au-delà d'une vitesse minimale prédéterminée, ouverture des deux voies même lorsque que l'inclinaison est supérieure audit seuil d'inclinaison prédéterminé, de façon à permettre une inclinaison supérieure à ladite inclinaison à l'arrêt.

Le procédé peut en outre comprendre une étape de détermination d'un seuil prédéterminé d'inclinaison en déplacement, supérieur audit seuil d'inclinaison à l'arrêt.

Ledit seuil prédéterminé d'inclinaison en déplacement peut être variable, notamment en fonction de la vitesse dudit véhicule.

### 5. Exposé des figures

D'autres caractéristiques et avantages de l'invention apparaîtront plus clairement à la lecture de la description d'un mode de réalisation particulier de l'invention, donné à titre de simple exemple illustratif et non limitatif, et des dessins annexés, parmi lesquelles :
- les figures 1 à 3 illustrent schématiquement un essieu pendulaire selon l'invention, respectivement :
   - figure 1 : essieu dans une position neutre, les deux roues étant dans un plan vertical ;
   - figure 2 : essieu dans une position inclinée, le véhicule étant à l'arrêt ;
   - figure 3 : essieu dans une position inclinée, le véhicule étant en mouvement ;
- les figures 4 et 5 illustrent deux variantes de mise en oeuvre de l'invention, le pendule des figures 1 à 3 étant remplacé respectivement par :

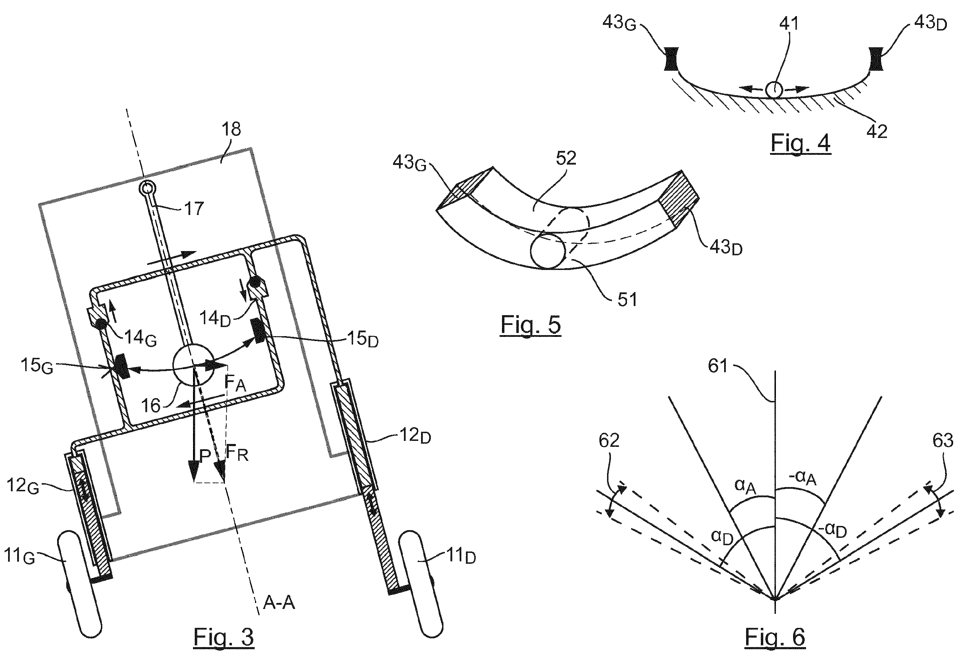

   - figure 4 : une bille mobile dans un support ;
   - figure 5 : un cylindre mobile dans un support ;
- la figure 6 illustre de façon schématique les inclinaisons possibles, selon que le véhicule est à l'arrêt ou en déplacement.

### 6. Description détaillée d'un mode de réalisation

L'invention concerne donc un véhicule pendulaire, dont l'inclinaison est contrôlée et limitée, à l'arrêt ou à faible vitesse, et qui peut alors être redressé. En d'autres termes, l'invention ne propose pas un blocage complet de l'inclinaison, mais un contrôle maîtrisé de celle-ci, tout en conservant la possibilité à tout moment d'un redressement.

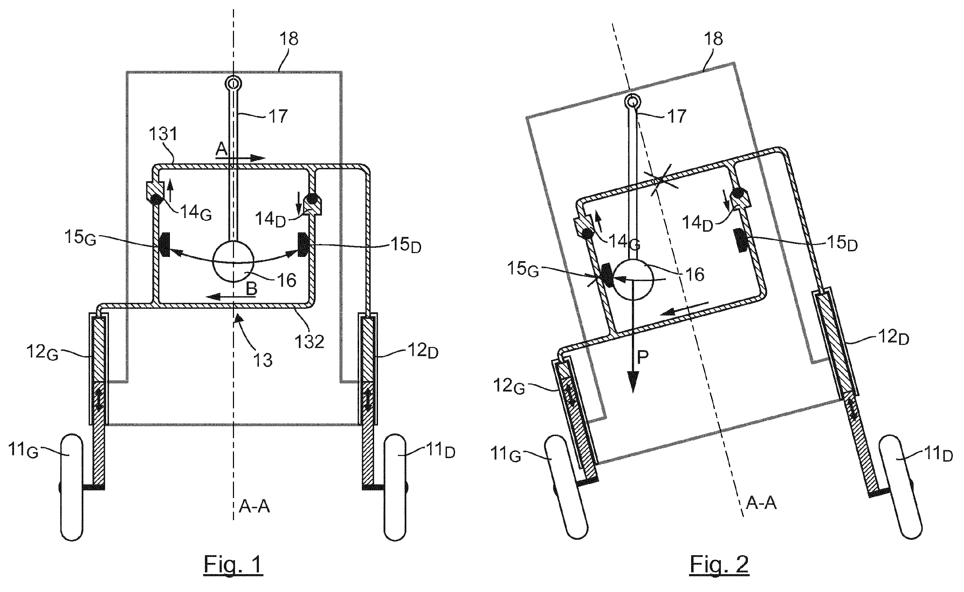

L'approche de l'invention est illustrée schématiquement par les figures 1 à 3. Ces trois figures illustrent, de façon simplifiée, un train d'un véhicule pendulaire selon l'invention, par exemple un train arrière moteur. Les deux roues gauche 11_{G} et droite 11_{D} sont chacune associée à un bras de suspension portant un vérin hydraulique 12_{G}, 12_{D}, reliés entre eux part un circuit 13, de façon que le fluide, ici de l'huile, puisse circuler de l'un des vérins vers l'autre des vérins. Comme on le voit sur les figures 3 et 4, lorsque le véhicule est incliné, ici vers la gauche, le vérin de gauche 12_{G} se vide, et le vérin de droite 12_{D} se remplit. La liaison hydraulique garantit que les deux roues s'inclinent simultanément, de façon optimisée.

Cependant, selon l'invention, le circuit hydraulique 13 n'est pas une liaison simple entre les deux vérins. Il prévoit au contraire deux voies monodirectionnelles définissant un basculeur :
- une première voie 131 mettant un oeuvre une vanne 14_{G} permettant uniquement la circulation du fluide du vérin 12_{G} vers le vérin 12_{D} (flèche A) ;
- une seconde voie 132 mettant un oeuvre une vanne 14_{D} permettant uniquement la circulation du fluide du vérin 12_{D} vers le vérin 12_{G} (flèche B).

On comprend que, selon les forces appliquées à droite ou à gauche sur le véhicule, le fluide circule de l'un des vérins vers l'autre, en empruntant la première ou la seconde voie 131 ou 132.

A l'arrêt et en position verticale (position dite « de repos »), comme illustré sur la figure 1, les deux vérins 12_{G}, 12_{D} sont dans une position intermédiaire, à demi-remplis.

Toujours à l'arrêt, il est possible d'incliner le véhicule, comme illustré sur la figure 2. Le véhicule est ici incliné vers la gauche. Cependant, s'il est utile qu'il puisse être légèrement incliné, il ne faut bien sûr pas qu'il bascule complètement, ce qui serait le cas, sous l'effet de la gravité, en l'absence des moyens de l'invention.

En effet, un élément de contrôle, sensible à la force de gravité, est prévu pour agir sélectivement sur des moyens de fermeture 15_{G}, 15_{D} agissant respectivement sur la première voie 131 et la seconde voie 132. Dans le mode de réalisation illustré sur ces figures 1 à 3, il s'agit d'un pendule 16, monté sur un bras ou un câble 17 mobile en rotation par rapport à un élément de la structure inclinable 18 du véhicule.

On note ici que, selon les modes de réalisation, la structure inclinable peut être le véhicule complet, ou seulement une partie de celui-ci, et au moins le poste de pilotage.

Comme on le voit sur la figure 2, illustrant le véhicule à l'arrêt, le pendule 16, sous l'effet de son poids P, se déplace vers le moyen de fermeture 15_{G} de la voie 131, lorsque la structure inclinable est inclinée vers la gauche. En effet, le bras 17 reste vertical alors que la structure inclinable s'incline. Le contact du pendule 16 avec le moyen de fermeture 15_{G} entraîne la fermeture de la voie 131. En conséquence, le vérin 12_{G} ne peut plus se vider, et l'inclinaison vers la gauche est interrompue, et ne peut se poursuivre au-delà d'un seuil souhaité (correspondant à la fermeture de la voie 131 par le pendule 16).

Bien sûr, seule la voie 131 est fermée, et la voie 132 reste ouverte. Il est donc possible de redresser le véhicule. L'invention permet ainsi, en toute sécurité, de contrôler une inclinaison maîtrisée et limitée, à l'arrêt, sans risque de chute ou d'inclinaison trop importante.

On comprend que, en pratique, cette fermeture n'est pas impérativement assurée par un contact direct du pendule avec les moyens de fermeture, comme illustré schématiquement sur la figure 2. Le pendule 16 peut en effet fermer un contact électrique, délivrant un signal de commande au moyen de fermeture 15_{G}.

Bien sûr, un des avantages d'un véhicule pendulaire est de permettre une inclinaison dans les courbes. Il ne faut donc pas que les moyens de fermeture soient actifs, dès qu'une certaine vitesse est atteinte. Ceci est assuré par le pendule 16, comme illustré par la figure 3.

En effet, lorsque le véhicule en marche prend un virage, il subit une accélération latérale. Le pilotage d'un véhicule pendulaire, (comme le pilotage d'une moto) exige que la structure inclinable (l'engin complet dans le cas d'une moto), penche vers l'intérieur du virage dans des proportions liées à l'accélération latérale (elle-même liée au rayon du virage et à la vitesse). Cela de façon telle que l'intensité de l'accélération latérale s'équilibre avec la tendance à chuter induite par l'action du poids au centre de gravité décalé de l'axe vertical.

Le pendule 16 subit également cette accélération latérale F_{A}, qui se combine au poids P. La force résultante F_{R} appliquée au pendule 16 maintient celui-ci sensiblement parallèle à l'axe A-A de la structure inclinable (et par exemple, sur la figure 3, aux deux vérins). Il est donc éloigné des deux moyens de fermeture 15_{G}, 15_{D}, et les deux voies 131 et 132 sont ouvertes. Le fluide hydraulique circule librement entre les deux vérins, et l'inclinaison du véhicule (à gauche dans l'exemple de la figure 3) est possible.

Des moyens de correction peuvent être prévus, pour prendre en compte les cas où le véhicule roule en travers d'un plan incliné (route en dévers).

D'autres moyens qu'un pendule peuvent bien sûr être mis en oeuvre, pour assurer la même fonction. Par exemple, comme illustré sur la figure 4, il peut s'agir d'une bille 41, mobile dans un support 42, et fermant un contact 43_{G}, 43_{D} en fonction de son déplacement.

Selon encore un autre mode de réalisation, illustré par la figure 5, la bille 41 peut être remplacée par un cylindre 51, mobile par exemple dans un guide incurvé 52.

Une autre approche consiste en la mise en oeuvre d'un ou plusieurs accéléromètres, par exemple associé à un micro-processeur, pour détecter la position de la structure inclinable, et délivrant des commandes d'ouverture et/ou de fermeture l'un des circuits, en fonction de l'inclinaison, de la vitesse et/ou de l'accélération.

On peut noter que, en particulier pour les modes de réalisation mettant en oeuvre un pendule ou une bille, le mouvement de l'un ou de l'autre peut ne pas être que latéral, pour contrôler l'inclinaison à gauche et à droite. Il est en effet possible de prendre en compte les déplacements de l'avant vers l'arrière, et réciproquement, pour autoriser ceux-ci lorsque le véhicule se déplace, mais les limiter à l'arrêt et/ou en marche lorsqu'ils deviennent excessifs. Un ou plusieurs accéléromètres peuvent également détecter cet aspect.

Ceci peut permettre de prendre par exemple en compte un cas où le véhicule serait exceptionnellement chargé de façon décentrée, au point que le vecteur P soit sensiblement déporté de la verticale d'origine, ou, en cas de roulage par vent latéral si important qu'il impose un peu d'inclinaison pour conserver l'équilibre.

L'invention peut bien sûr être adaptée à de nombreux types de véhicules pendulaires. A titre d'exemple, elle peut être mise en oeuvre sur un véhicule équipés de quatre bras tirés (par exemple d'une longueur de 450 mm), portant quatre roues inclinables, par exemple deux roues avant directrices et deux roues arrière motrices.

Il peut par exemple offrir deux places en tandem.

Le débattement des suspensions peut être compris entre 150 et 200 mm. La direction peut mettre en oeuvre une crémaillère circulaire et des biellettes (rapport 4/1 par exemple).

Les dimensions et caractéristiques principales peuvent être par exemple :
- Longueur totale : 2660 mm ;
- Largeur totale (aux roues) : 890 mm ;
- Empattement: 1800 mm / 1700 mm ;
- Garde au sol : 200 mm ;
- Rayon de braquage : 3,5 m ;
- Angle de chasse : 24° ;
- Voie avant : 760 mm ;
- Voie arrière : 760 mm ;
- Diamètre des quatre roues : 17".

Les moyens d'inclinaison (en anglais « tilting ») sont donc libre et non piloté, et peuvent comprendre :
- un vérin hydraulique par bras de suspension ;
- une liaison hydraulique entre les vérins d'un même train (basculeur) ;
- un amortisseur en série sur chaque vérin ;
- débattement des bras : environ 90°.

Le moteur peut notamment être en position arrière, avec une boîte de vitesses et un différentiel devant le moteur. Celui-ci délivre par exemple 20 à 40 kW, pour permettre une vitesse maximum de l'ordre de 120 àl40 km/h. Il peut être par exemple électrique ou thermique.

La boîte peut notamment mettre en oeuvre une transmission à variation continue (CVT) et comprendre une marche arrière.

L'invention concerne également un procédé de contrôle de l'inclinaison d'un véhicule pendulaire, qui permet d'incliner le véhicule à l'arrêt et de le redresser, de façon sécurisée (sans risque de chute). Ce procédé peut notamment être mis en oeuvre dans un véhicule tel que décrit ci-dessus, et les aspects mentionnés précédemment peuvent s'appliquer à ce procédé.

Un tel procédé comprend notamment des étapes de mesure, ou d'obtention d'information :
- détermination de la vitesse dudit véhicule, de façon à au moins distinguer deux situations : l'arrêt (et le cas échéant un déplacement à très faible vitesse, inclus ici dans la notion élargie d'arrêt), et le déplacement (le cas échéant supérieur à un seuil correspondant au déplacement à très faible vitesse ;
- détermination de l'inclinaison dudit véhicule.

Selon l'invention, la situation à l'arrêt n'est pas un blocage ou un maintien du véhicule dans la position verticale (figure 1). Au contraire, une inclinaison est possible, y compris à l'arrêt, par exemple pour faciliter l'installation et la sortie du véhicule, et/ou son chargement. Bien sûr, il est également possible de le redresser. Ainsi, comme illustré sur la figure 6, si le véhicule est à l'arrêt :
- les deux voies 131, 132 sont ouverte tant que l'inclinaison α_{A}, -α_{A} par rapport à la verticale 61 est inférieure à un seuil d'inclinaison à l'arrêt prédéterminé de façon à permettre une inclinaison contrôlée à l'arrêt. αA est choisi de façon que le véhicule ne puisse pas basculer, mais que l'accès soit facilité. Ceci permet également de faciliter les manipulations, par exemple pour déplacer le véhicule sans y pénétrer et/ou sans le démarrer ;
- la voie correspondant à la direction d'inclinaison est immédiatement fermée, dès que le seuil d'inclinaison à l'arrêt α_{A} ou -α_{A} est atteint, empêchant ainsi le véhicule de s'incliner plus, et facilitant par exemple l'installation et la sortie d'une personne. Bien sûr, l'autre voie reste ouverte, de façon à permettre le redressement dudit véhicule.

Lorsque le véhicule est dans la situation de déplacement, il doit en revanche pouvoir dépasser le seuil d'inclinaison à l'arrêt. Ainsi, au-delà d'une vitesse minimale prédéterminée, les deux voies 131, 132 sont ouvertes, même lorsque que l'inclinaison est supérieure audit seuil d'inclinaison à l'arrêt, de façon à permettre une inclinaison supérieure.

Bien sûr, l'inclinaison ne peut pas être dépasser à un seuil maximal, ou seuil prédéterminé en déplacement α_{D}, -α_{D}, qui peut soit correspondre à une contrainte mécanique (inclinaison maximale permise par les vérins et/ou d'autres éléments du véhicule, soit être variable (flèches 62, 63), par exemple en fonction de la vitesse et le cas échéant d'autres informations (charge, décentrage, ...) permettant de sécuriser le véhicule.

## Revendications

1. Véhicule pendulaire, comprenant au moins un train pendulaire portant deux bras de suspension associés chacun à un vérin hydraulique (12_{G}, 12_{D}),
lesdits vérins hydrauliques (12_{G}, 12_{D}) étant reliés entre eux par un circuit hydraulique (13) définissant deux voies (131, 132) monodirectionnelles, une première voie (131) permettant la circulation d'un fluide d'un premier des vérins (12_{G}, 12_{D}) vers le second des vérins (12_{G}, 12_{D}), et une seconde voie (132) permettant la circulation d'un fluide du second des vérins (12_{G}, 12_{D}) vers le premier des vérins (12_{G}, 12_{D}),
des moyens de fermeture sélective (15_{G}, 15_{D}) permettant de fermer l'une ou l'autre desdites voies (131, 132),
**caractérisé en ce qu'**il est inclinable à l'arrêt, et **en ce qu'**il comprend des moyens de commande (16, 41, 51) desdits moyens de fermeture (15_{G}, 15_{D}) tenant compte de l'inclinaison et de la vitesse dudit véhicule, de façon que :
- à l'arrêt, ledit véhicule peut être incliné par rapport à un axe vertical jusqu'à un seuil d'inclinaison à l'arrêt prédéterminé ;
- au-delà d'un seuil de vitesse minimal, ledit véhicule peut être incliné par rapport à un axe vertical au-delà dudit seuil d'inclinaison prédéterminé.

2. Véhicule pendulaire selon la revendication 1, **caractérisé en ce que** lesdits moyens de fermeture (15_{G}, 15_{D}) sont contrôlés par un élément de commande réagissant à la gravité et/ou à l'accélération latérale dudit véhicule.

3. Véhicule pendulaire selon la revendication 2, **caractérisé en ce que** ledit élément de commande comprend un pendule (16).

4. Véhicule pendulaire selon la revendication 2, **caractérisé en ce que** ledit élément de commande comprend une masse libre en déplacement latéral dans un support (42), par exemple une bille (41) ou un cylindre mobile (51).

5. Véhicule pendulaire selon la revendication 2, **caractérisé en ce que** ledit élément de commande comprend au moins un accéléromètre.

6. Véhicule pendulaire selon l'une quelconque des revendications 1 à 5, **caractérisé en ce que** lesdits moyens de fermeture (15_{G}, 15_{D}) sont actionnés à partir d'un signal de commande électrique.

7. Véhicule pendulaire selon l'une quelconque des revendications 1 à 6, **caractérisé en ce que** chacun desdits vérins (12_{G}, 12_{D}) est monté en série avec un amortisseur.

8. Véhicule pendulaire selon l'une quelconque des revendications 1 à 7, **caractérisé en ce qu'**il comprend deux trains pendulaires, un train avant directeur et un train arrière moteur, lesdits moyens de fermeture sélective (15_{G}, 15_{D}) étant associés au train arrière.

9. Véhicule pendulaire selon l'une quelconque des revendications 1 à 8, **caractérisé en ce qu'**il comprend deux places disposés en tandem.

10. Véhicule pendulaire selon l'une quelconque des revendications 1 à 9, **caractérisé en ce qu'**il met en oeuvre quatre bras tirés.

11. Procédé de contrôle de l'inclinaison d'un véhicule pendulaire, comprenant au moins un train pendulaire portant deux bras de suspension associés chacun à un vérin hydraulique (12_{G}, 12_{D}),
lesdits vérins hydrauliques (12_{G}, 12_{D}) étant reliés entre eux par un circuit hydraulique (13) définissant deux voies (131, 132) monodirectionnelles, une première voie (131) permettant la circulation d'un fluide d'un premier des vérins (12_{G}, 12_{D}) vers le second des vérins (12_{G}, 12_{D}), et une seconde voie (132) permettant la circulation d'un fluide du second des vérins (12_{G}, 12_{D}) vers le premier des vérins (12_{G}, 12_{D}),
des moyens de fermeture sélective (15_{G}, 15_{D}) permettant de fermer l'une ou l'autre desdites voies (131, 132),
**caractérisé en ce qu'**il comprend les étapes suivantes :
- détermination de la vitesse dudit véhicule ;
- détermination de l'inclinaison dudit véhicule ;
- si le véhicule est à l'arrêt :
∘ ouverture des deux voies (131, 132) tant que l'inclinaison est inférieure à un seuil prédéterminé d'inclinaison à l'arrêt, de façon à permettre une inclinaison contrôlée à l'arrêt ;
o fermeture de l'une desdites voies lorsque ledit seuil prédéterminé d'inclinaison à l'arrêt est atteint, et ouverture de l'autre desdites voies, de façon à permettre le redressement dudit véhicule ;
- si le véhicule est en déplacement au-delà d'une vitesse minimale prédéterminée, ouverture des deux voies (131, 132) même lorsque que l'inclinaison est supérieure audit seuil d'inclinaison prédéterminé, de façon à permettre une inclinaison supérieure à ladite inclinaison à l'arrêt.

12. Procédé selon la revendication 11, **caractérisé en ce qu'**il comprend une étape de détermination d'un seuil prédéterminé d'inclinaison en déplacement, supérieur audit seuil d'inclinaison à l'arrêt.

13. Procédé selon la revendication 12, **caractérisé en ce que** ledit seuil prédéterminé d'inclinaison en déplacement est variable en fonction de la vitesse dudit véhicule.
